# EUROPÄISCHE PATENTANMELDUNG

(11) **EP 3 584 874 A1**
(43) Veröffentlichungstag der Anmeldung: **25.12.2019**
(21) Anmeldenummer: 18178574.2
(22) Anmeldetag: 19.06.2018
(51) Int. Cl.: H01M 10/42, H01G 11/18, H01M 10/48, H02H 7/16

(54) **SPEICHEREINHEIT FÜR ELEKTRISCHE ENERGIE, VERFAHREN ZUR ÜBERWACHUNG EINER SOLCHEN SPEICHEREINHEIT SOWIE FAHRZEUG**

(71) Anmelder: Siemens Aktiengesellschaft, 80333 München (DE)
(72) Erfinder: Klüber, Thomas, 91052 Erlangen (DE)

(57) **Zusammenfassung**

Die Erfindung betrifft eine Speichereinheit (11) für elektrische Energie sowie ein Verfahren zur Überwachung einer solchen Speichereinheit (11). Die Speichereinheit (11) weist zumindest ein Speicherelement (1) zur kurzzeitigen Speicherung elektrischer Energie, beispielhaft einen Akku oder einen Kondensator, auf. Dem Speicherelement (1) ist ein Mittel (3) zur Erfassung physikalischer Größen, insbesondere eines Druckes (p) oder einer Temperatur (T), im unmittelbaren Umfeld des Speicherelements (1) zugeordnet, wobei das Mittel (3) zur Erfassung der physikalischen Größe, insbesondere zur Erfassung einer zeitlichen Änderung der physikalischen Größe, ausgebildet ist, wobei das Mittel (3) zur Erfassung der physikalischen Größe bei Überschreiten einer vorgebbaren zeitlichen Änderung der physikalischen Größe zur Bereitstellung eines Signals ausgebildet ist. Ein vorteilhafter Einsatz der Erfindung erfolgt in einem Zwischenkreiskondensator bei einem Schienenfahrzeug.

## Beschreibung

Die Erfindung betrifft eine Speichereinheit für elektrische Energie und ein Verfahren zur Überwachung einer solchen Speichereinheit. Weiter betrifft die Erfindung ein Fahrzeug, insbesondere ein Schienenfahrzeug.

Speichereinheiten für elektrische Energie, wie ein Akku oder ein Kondensator, können bei einem Kurzschluss oder einer sonstigen Fehlfunktion schwere Schäden verursachen. Demnach ist eine Überwachung auf einen Temperaturanstieg in der unmittelbaren Umgebung einer solchen Speichereinheit bereits Stand der Technik.

DE 10 2014 204 965 A1 beschreibt ein Verfahren zur Erkennung von Anomalien in einer Batteriezelle und eine Kurzschluss Sensorik.

US 2013 012 2332 A1 offenbart darüber hinaus ein System mit einer integrierten Schaltung, einem Drucksensor und einer Kommunikationsvorrichtung zur Integration in eine Batteriezelle.

Insbesondere für Speichereinheiten zur Speicherung elektrischer Energie ist eine schnelle Reaktion auf eine Fehlfunktion wichtig. Daher ist es Aufgabe der Erfindung, die Erkennung einer Fehlfunktion in einer Speichereinheit schnell und sicher zu erkennen.

Die Aufgabe wird durch eine Speichereinheit nach Anspruch 1 gelöst. Die Aufgabe wird weiter durch ein Verfahren zur Überwachung einer Speichereinheit nach Anspruch 9 gelöst.

Schließlich wird die Aufgabe durch ein Fahrzeug, insbesondere ein Schienenfahrzeug oder einen Frequenzumrichter mit einer solchen Speichereinheit gelöst.

Die Speichereinheit für elektrische Energie weist zumindest ein Speicherelement zur Speicherung elektrischer Energie, beispielhaft einen Akku oder einen Kondensator, auf, wobei dem Speicherelement ein Mittel zur Erfassung physikalischer Größen, insbesondere eines Druckes oder einer Temperatur, im unmittelbaren Umfeld zugeordnet ist, wobei das Mittel zur Erfassung der physikalischen Größe zur Erfassung einer zeitlichen Änderung der physikalischen Größe ausgebildet ist, wobei das Mittel zur Erfassung der physikalischen Größe bei Überschreiten einer vorgebbaren zeitlichen Änderung der physikalischen Größe zur Bereitstellung eines Signals ausgebildet ist.

Die Speichereinheit ist vorzugsweise als Kondensatoren-Board in einem Frequenzumrichter ausgebildet. Ein Zwischenkreiskondensator ist oft als ein solches Kondensatoren-Board ausgebildet. Die Speichereinheit kann auch als Akku oder als Batterie ausgebildet sein. Die Speicherelemente eignen sich insbesondere zur kurzzeitigen Speicherung von elektrischer Energie.

Die Speichereinheit ist vorzugsweise in einem Gehäuse angeordnet.

Das Speicherelement ist vorzugsweise als ein elektronisches Bauteil zur zeitweisen Speicherung von elektrischer Energie ausgebildet. Beispielhaft ist ein solches Speicherelement als Kondensator, als Super-Cap, als Batteriezelle oder als Akku-Zelle ausgebildet.

Das Mittel zur Erfassung der physikalischen Größe ist vorzugsweise als Sensor für die Temperatur und/oder als Sensor für den Druck ausgebildet. Das Mittel zur Erfassung der physikalischen Größe ist vorzugsweise zur Bereitstellung eines Signals ausgebildet. Das Mittel zur Erfassung der physikalischen Größe ist alternativ oder zusätzlich als veränderlicher elektrischer Widerstand ausgebildet. Vorzugsweise nimmt der elektrische Widerstand bei einem starken Anstieg der physikalischen Größe messbar ab.

Unter einer Zuordnung im unmittelbaren Umfeld wird insbesondere verstanden, dass das Mittel zur Erfassung einer physikalischen Größe
- auf einer Oberfläche des Speicherelements positioniert ist,
- zwischen jeweils zwei Speicherelementen positioniert ist,
- in unmittelbarer Näher eines Speicherelements positioniert ist,
- in dem Speicherelement integriert ist oder
- in einem Gehäuse mit dem Speicherelement positioniert ist.

Durch die Position des Mittels zur Erfassung der physikalischen Größe kann beispielhaft ein Anstieg des Drucks, welcher von dem Speicherelement bei einer Fehlfunktion ausgeht, schnell und sicher erfasst werden.

Neben der Erfassung der Änderung der physikalischen Größe kann auch die jeweilige absolute physikalische Größe erfasst werden. Die vorgebbare zeitliche Änderung kann eine Funktion der absoluten Größe sein. Beispielhaft kann ein vorgebbarer zeitlicher Anstieg von der Temperatur oder dem Druck bei einem hohen Umgebungs-Druck oder einer hohen UmgebungsTemperatur höher sein als bei einem Normalzustand (20 Grad Celsius, 1 Atm.).

Bei Bedarf kann dem Mittel zur Erfassung einer physikalischen Größe eine Energieversorgung zugeordnet sein. Vorteilhaft bilden das Mittel und die Energieversorgung eine bauliche Einheit.

Zur Erfassung der physikalischen Größe im unmittelbaren Umfeld des Speicherelements kann das Mittel auf der Oberfläche des Speicherelements oder in unmittelbarer Nähe positioniert sein. Vorzugsweise ist das Mittel zur Erfassung der physikalischen Größe mit einem Befestigungsmittel an dem Speicherelement befestigt.

Das Befestigungsmittel umfasst vorzugsweise eine Klebeverbindung oder eine Klemmverbindung oder ist als solche ausgebildet.

Insbesondere zur Erfassung der zeitlichen Änderung der physikalischen Größe kann dem Mittel zur Erfassung ein flüchtiger oder nichtflüchtiger Datenspeicher zugeordnet sein.

Vorzugsweise ist der elektrische Widerstand des Mittels zur Erfassung der physikalischen Größe bei Überschreiten der vorgebbaren zeitlichen Änderung näherungsweise Null. Das Mittel zur Erfassung der physikalischen Größe ist demnach als veränderbarer Widerstand ausgebildet. Vorteilhaft fließt ein Strom ungehindert durch das Mittel zur Erfassung der physikalischen Größe insofern ein zeitlicher Anstieg der physikalischen Größe erfasst ist.

Unter einer vorgebbaren zeitlichen Änderung der physikalischen Größe wird insbesondere ein Wert für die zeitliche Änderung verstanden, der lediglich bei einer Fehlfunktion des Speicherelementes bzw. der Speichereinheit auftritt.

Beispielhaft ist bei einem Kurzschluss in einem Kondensator ein kurzzeitiger Druckanstieg im Gehäuse des Kondensators feststellbar. Dieser Druckanstieg ist größer als ein Druckanstieg, der beispielhaft durch natürlichen Druckanstieg (durch veränderliche Witterungsbedingungen) erfolgt.

Ebenso kann bei einer Fehlfunktion einer Speichereinheit ein Temperaturanstieg erfolgen, der über einen von außen induzierten Temperaturanstieg hinausgeht. Durch die Erfassung eines solchen Temperaturanstieges durch das Mittel zur Erfassung der physikalischen Größe (Temperatur) kann eine Fehlfunktion eines Speicherelements oder der Speichereinheit sicher und schnell festgestellt werden.

Die vorgebbare zeitliche Änderung der physikalischen Größe ist vorzugsweise ein Wert, welcher betragsmäßig größer ist als ein Wert der natürlichen zeitlichen Änderung der physikalischen Größe.

Das Signal kann ein TTL-Signal (Transistor-Transistor-Logik-Signal) sein, wobei das Signal einem übergeordneten Sicherheitssystem bereitgestellt wird.

Durch eine solche Speichereinheit, die mit einem solchen Mittel zur Erfassung der physikalischen Größe ausgestattet ist, kann eine Fehlfunktion schnell und vor allem sicher ermittelt werden. Die Erfindung trägt demnach zum sicheren Betrieb der Speichereinheit bei.

Bei dem Verfahren zur Überwachung einer Speichereinheit für elektrische Energie auf eine Fehlfunktion, insbesondere einem Kurzschluss, umfasst der Energiespeicher einen oder mehrere Speicherelemente, wobei dem jeweiligen Speicherelement ein Mittel zur Erfassung einer physikalischen Größe zugeordnet ist, wobei das Mittel zur Erfassung der physikalischen Größe eine zeitliche Änderung der physikalischen Größe detektiert, wobei das Mittel zur Erfassung der physikalischen Größe bei Überschreiten einer vorgebbaren zeitlichen Änderung der physikalischen Größe ein Signal bereitstellt oder einen elektrischen Widerstand aufweist.

Unter einer Fehlfunktion wird insbesondere ein Kurzschluss, eine Überhitzung eines Speicherelements verstanden. Darüber hinaus kann eine Verpuffung in einem Speicherelement eine Folge einer Fehlfunktion, beispielsweise ein Kurzschluss, sein.

Bei einem Kurzschluss in einem Kondensator oder einer Batterie wird in der Regel innerhalb kurzer Zeit ein Reaktionsgas freigesetzt oder es erfolgt ein rascher Temperaturanstieg. Beide Phänomene führen zu einem raschen zeitlichen Anstieg des Druckes im unmittelbaren Umfeld des jeweiligen Speicherelements. Dieser zeitliche Anstieg des Druckes kann mit dem Mittel zur Erfassung der physikalischen Größe erfasst werden. Bei Überschreiten der zeitlichen Änderung der physikalischen Größe, insbesondere des Drucks, kann auf eine Fehlfunktion geschlossen werden.

Durch das Verfahren kann eine rasche und sichere Feststellung einer Fehlfunktion erfolgen.

Bei einer vorteilhaften Ausgestaltung der Erfindung sind das Mittel zur Erfassung der physikalischen Größe und das Speicherelement in einem geschlossenen oder im Wesentlichen geschlossenen Gehäuse angeordnet.

Durch die Anordnung der jeweiligen Speicherelemente in einem Gehäuse kann eine räumliche Trennung der Speicherelemente von weiteren elektronischen Baugruppen zum Schutz der Baugruppen erfolgen. Durch die Positionierung des Mittels zur Erfassung der physikalischen Größe kann eine Bestimmung der Temperatur oder des Druckes mit einer erhöhten Genauigkeit erfolgen, da das Gehäuse das jeweilige Speicherelement sowie das Mittel zur Erfassung der physikalischen Größe von der Umgebung abschirmt.

Bei einer weiteren vorteilhaften Ausgestaltung der Erfindung ist dem Mittel zur Erfassung der physikalischen Größe eine Auswerteeinrichtung zugeordnet, wobei der Auswerteeinrichtung und/oder dem Mittel zur Erfassung der physikalischen Größe eine Energiequelle zugeordnet ist und die Energiequelle zur Versorgung des Mittels zur Erfassung der physikalischen Größe und/oder der Auswerteeinrichtung mit elektrischer Energie vorgesehen ist.

Die Auswerteeinrichtung liegt vorzugsweise mit dem Mittel zur Erfassung der physikalischen Größe als gekapselte Einheit vor. Vorzugsweise kann die Energiequelle ebenfalls in der gekapselten Einheit integriert sein. Eine solche gekapselte Einheit kann vereinfacht in einer bestehenden Speichereinheit integriert werden. Eine solche gekapselte Einheit kann in ein Speicherelement selbst integriert sein.

Durch diese Einheit sind das Mittel zur Erfassung der physikalischen Größe und die Auswerteeinheit in eine bestehende Speichereinheit und/oder ein bereits bestehendes Speicherelement nachrüstbar.

Die Auswerteeinheit ermittelt vorzugsweise die physikalische Größe und/oder erfasst die zeitliche Änderung der von dem Mittel erfassten physikalischen Größe. Die zeitliche Änderung kann als Signal einem übergeordneten Sicherheitssystem bereitgestellt werden. Vorzugsweise ist die Auswerteeinrichtung derart eingerichtet, dass nur bei Überschreiten der vorgebbaren zeitlichen Änderung der physikalischen Größe ein Signal bereitgestellt wird. Anstelle eines Signals kann die Auswerteeinrichtung oder das Mittel zur Erfassung der physikalischen Größe auch als veränderbarer elektrischer Widerstand ausgebildet sein, wobei der elektrische Widerstand der Auswerteeinrichtung oder das Mittel zur Erfassung der elektrischen Größe einen vorgebbaren elektrischen Widerstand aufweist, insofern die zeitliche Änderung der physikalischen Größe die vorgebbare zeitliche Änderung betragsmäßig übersteigt.

Die Energiequelle dient zur Versorgung der Auswerteeinrichtung und/oder des Mittels zur Erfassung der physikalischen Größe mit elektrischer Energie.

Durch die vorgeschlagene gekapselte Einheit ist eine bereits bestehende Speichereinheit auf besonders einfache Art und Weise nachrüstbar.

Bei einer weiteren vorteilhaften Ausgestaltung der Erfindung Speichereinheit ist das Mittel zur Erfassung der physikalischen Größe als Druck- und/oder Temperatursensor ausgebildet.

Vorzugsweise umfasst das Mittel zur Erfassung der physikalischen Größe einen Temperatursensor und/oder einen Drucksensor.

Das Mittel zur Erfassung der physikalischen Größe dient vorzugsweise unmittelbar zur Erfassung der zeitlichen Änderung der Temperatur und/oder zur unmittelbaren Erfassung der zeitlichen Änderung des Druckes.

Durch die Bestimmung des Druckes und/oder der Temperatur kann besonders einfach und sicher auf eine Fehlfunktion der Speichereinheit geschlossen werden.

Bei einer weiteren vorteilhaften Ausgestaltung der Erfindung ist das Signal entsprechend einem elektrischen Widerstand des Mittels zur Erfassung der physikalischen Größe ausgebildet.

In einer vorteilhaften Ausgestaltung des Mittels zur Erfassung der physikalischen Größe ist gemäß der physikalischen Größe und/oder gemäß der zeitlichen Änderung der physikalischen Größe der elektrische Widerstand des Mittels festgelegt.

So kann der elektrische Widerstand des Mittels zur Erfassung der physikalischen Größe proportional zum Druck oder zur Temperatur sein.

Weiter kann der elektrische Widerstand des Mittels zur Erfassung der physikalischen Größe oder der optional zugeordneten Auswerteeinheit proportional zur zeitlichen Veränderung des Druckes oder der Temperatur sein.

Durch die Ausgestaltung des Mittels zur Erfassung der physikalischen Größe und/oder der Auswerteeinrichtung als veränderlichen elektrischen Widerstand kann die Feststellung einer Fehlfunktion auch ohne eine Energiequelle oder beim Ausfall der Energiequelle für das Mittel oder für die Auswerteeinrichtung erfolgen.

Durch diese Ausführung wird die Sicherheit durch die Überwachung der Speichereinheit erhöht werden.

Bei einer weiteren vorteilhaften Ausgestaltung der Erfindung ist das Mittel zur Erfassung einer physikalischen Größe in dem Speicherelement integriert.

Vorteilhaft ist das Mittel zur Erfassung der physikalischen Größe als Folien-artige oder als flache und biegsame Struktur ausgebildet.

Durch die flache und biegsame Ausprägung des Mittels zur Erfassung der physikalischen Größe kann eine Integration in ein Speicherelement leicht erfolgen.

Alternativ kann das Mittel zur Erfassung gekapselt ausgebildet sein. Vorteilhaft erfolgt die Kapselung derart, dass das Mittel zur Feststellung der physikalischen Größe leicht auf die Oberfläche oder im Inneren des Speicherelements befestigbar ist.

Die Kapselung des Mittels zur Erfassung der physikalischen Größe kann zusammen mit der Auswerteeinrichtung und der Energiequelle erfolgen. Vorteilhaft kann die Kapselung derart erfolgen, dass eine hohe Brandschutzklasse für die gekapselte Einheit erhaltbar ist.

Bei einer vorteilhaften Ausgestaltung der Erfindung sind die Auswerteeinrichtung und/oder das Mittel zur Erfassung einer physikalischen Größe mit einem übergeordneten Sicherheitssystem verbunden.

Das übergeordnete Sicherheitssystem ist vorzugsweise als Brandschutzsicherung ausgebildet. Das übergeordnete Sicherheitssystem erfasst vorteilhaft den elektrischen Widerstand des Mittels zur Erfassung der physikalischen Größe und/oder des elektrischen Widerstandes der Auswerteeinrichtung. Alternativ oder zusätzlich weist das übergeordnete Sicherheitssystem einen Eingang für das Signal auf, welches die Auswerteeinrichtung und/oder das Mittel zur Erfassung der physikalischen Größe bereitstellt.

Bei einer Fehlfunktion, d.h. einer zeitlichen Änderung der physikalischen Größe über betragsmäßig über die vorgebbare zeitliche Änderung der physikalischen Größe hinaus, dient die übergeordnete Sicherheitssteuerung vorzugsweise zur Unterbrechung der Energiezufuhr des Speicherelements. Vorteilhaft dient das übergeordnete Sicherheitssystem zur kontrollierten Abführung der gespeicherten elektrischen Energie aus der Speichereinheit oder aus dem jeweiligen Speicherelement.

Durch die Integration des Mittels zur Erfassung der physikalischen Größe kann ein übergeordnetes Sicherheitssystem in seiner Funktion erweitert werden. So kann die hier beschriebene Speichereinheit mit einer verbesserten Sicherheit betrieben werden.

Bei einer weiteren vorteilhaften Ausgestaltung der Erfindung ist der Speichereinheit ein erstes Mittel zur Erfassung einer physikalischen Größe und ein zweites Mittel zur Erfassung einer physikalischen Größe zugeordnet, wobei das erste und das zweite Mittel zur Erfassung der physikalischen Größe mit dem übergeordneten Sicherheitssystem verbunden sind, wobei das erste und das zweite Mittel zur Erfassung der physikalischen Mittel jeweils bei Überschreiten der vorgebbaren zeitlichen Änderung der physikalischen Größe oder einer festgelegten physikalischen Größe einen festgelegten elektrischen Widerstand aufweisen, wobei der elektrische Widerstand von dem übergeordneten Sicherheitssystem erfasst wird, wobei das erste und das zweite Mittel zur Erfassung der physikalischen Größe elektrisch parallel geschaltet sind.

Vorzugsweise ist das erste Mittel zur Erfassung einer physikalischen Größe als Temperatursensor, insbesondere als Brandschutzkabel, ausgebildet.

Vorzugsweise ist das zweite Mittel zur Erfassung einer physikalischen Größe als Drucksensor ausgebildet.

Der Drucksensor dient zur Erfassung eines rasch ansteigenden Druckes durch eine Fehlfunktion in einem Speicherelement.

Vorzugsweise sind das erste Mittel und das zweite Mittel zur Erfassung der physikalischen Größe jeweils elektrisch parallel geschaltet.

Im Falle eines Brandschutzkabels in Kombination mit einem Druckmesser sind vorzugsweise beide Mittel zur Erfassung der physikalischen Größe als veränderliche Widerstände ausgebildet. Im Falle einer Fehlfunktion ändert sich zumindest einer der elektrischen Widerstände. Diese Änderung des elektrischen Widerstandes kann durch das übergeordnete Sicherheitssystem überwacht werden. Bei einer Änderung des elektrischen Widerstandes kann auf eine Fehlfunktion geschlossen werden und das übergeordnete Sicherheitssystem stellt ein Warnsignal bereit und/oder leitet die oben genannten Schritte ein.

Bei einer weiteren vorteilhaften Ausgestaltung der Erfindung ist das übergeordnete Sicherheitssystem bei Überschreiten der vorgebbaren zeitlichen Änderung der physikalischen Größe zur Entkoppelung und/oder zur Ableitung der elektrischen Energie aus dem jeweiligen Speicherelement ausgebildet.

Eine Entkopplung des jeweiligen Speicherelements oder die Entkopplung der Speichereinheit von der Energieversorgung erfolgt vorzugsweise durch Auftrennen der Energiezuführung. Das Auftrennen erfolgt in besonders einfacher Art und Weise durch einen Schalter.

Vorzugsweise erfolgt im Falle einer Fehlfunktion die Übertragung der in dem jeweiligen Speicherelement gespeicherten Energie in einen Lastwiderstand. So kann die Brandgefahr weiter reduziert werden.

Bei einer weiteren vorteilhaften Ausgestaltung der Erfindung wird das Signal einem übergeordneten Sicherheitssystem bereitgestellt, wobei das übergeordnete Sicherheitssystem bei Erhalt des Signals die Zufuhr von elektrischer Energie in das jeweilige Speicherelement unterbindet und/oder die elektrische Energie aus dem jeweiligen Speicherelement entfernt.

Das Signal kann hierbei, wie vorstehend ausgeführt, auch als elektrischer Widerstand des jeweiligen Mittels zur Erfassung der physikalischen Größe ausgebildet sein.

Durch die Ausführung kann eine besonders schnell reagierende Erfassung der Fehlfunktion der Speichereinheit registriert werden.

Bei einer weiteren vorteilhaften Ausgestaltung der Erfindung wird mit Hilfe des Mittels zur Erfassung der physikalischen Größe ein Druck- und/oder Temperaturanstieg im unmittelbaren Umfeld des jeweiligen Speicherelements erfasst.

Vorzugsweise erfasst das Mittel zur Erfassung der physikalischen Größe die zeitliche Änderung der Temperatur und/oder des Druckes direkt.

Unter einer direkten Erfassung einer zeitlichen Änderung wird die Erfassung der Änderung der physikalischen Größe ohne den Einsatz einer Recheneinheit, welche eine zeitliche Differentiation der physikalischen Größe nach der Zeit durchführt.

Vorzugsweise ist dem jeweiligen Speicherelement ein eigenes Mittel zur Erfassung der physikalischen Größe zugeordnet.

Alternativ oder zusätzlich ist dem jeweiligen Mittel zur Erfassung der physikalischen Größe zumindest ein Speicherelement zugeordnet.

Durch die Ermittlung der zeitlichen Änderung, insbesondere des Anstieges des Druckes und/oder der Temperatur, kann eine besonders sichere Überwachung einer Speichereinheit erfolgen. Explosionen oder eine starke Wärmeentwicklung können so leicht und sicher registriert werden.

Bei einer weiteren vorteilhaften Ausgestaltung der Erfindung weist das Mittel zur Erfassung der physikalischen Größe, je nach Änderung der physikalischen Größe, einen bekannten elektrischen Widerstand auf, wobei der Widerstand von dem übergeordneten Sicherheitssystem erfasst wird.

Der bekannte Widerstand ist vorzugsweise nahe Null oder Unendlich, so dass im Falle einer Fehlfunktion der Speichereinheit ein Strom entweder weitgehend ungehindert oder nicht fließt. Dies ist vorteilhaft einfach nachzuweisen.

Einen Widerstand auf einen bestimmten endlichen positiven Wert ungleich Null, beispielshaft ca. 100 Ohm, festzulegen kann auf der anderen Seite eine besonders sichere Überwachung der Speichereinheit gewährleisten. Ein "falscher Alarm" ist hierdurch weitgehend ausgeschlossen.

Eine vorteilhafte Anwendung der hier beschriebenen Erfindung ist ein Fahrzeug, insbesondere Schienenfahrzeug, mit einer oben beschriebenen Speichereinheit.

Das Fahrzeug weist vorteilhaft einen Energiespeicher für elektrische Energie, wie eine Batterie, auf. Weiter vorteilhaft kann die Erfindung zur Überwachung eines Zwischenkreiskondensators, insbesondere einer Einheit mit einer Mehrzahl von Kondensatoren, dienen.

Besonders vorteilhaft erfolgt der Einsatz der Erfindung in einem Schienenfahrzeug wie einer Lokomotive. Bevorzugt dient die Erfindung zur Überwachung eines Zwischenkreisspeichers bei einem Frequenzumrichter des Schienenfahrzeugs.

Eine weitere vorteilhafte Anwendung der Erfindung ist als Frequenzumrichter, aufweisend eine hier beschriebene Speichereinheit.

Ein Zwischenkreiskondensator des Frequenzumrichters kann eine solche Speichereinheit sein.

Im Folgenden wird die Erfindung anhand von Figuren näher beschrieben und erläutert. Die in den Figuren gezeigten Merkmale können im Rahmen der Erfindung zu neuen Ausgestaltungen der Erfindung kombiniert werden.

Es zeigen:
- FIG 1: eine beispielhafte Speichereinheit,
- FIG 2: eine beispielhafte Speichereinheit mit einem integrierten Mittel zur Erfassung einer physikalischen Größe,
- FIG 3: eine beispielhafte Speichereinheit,
- FIG 4: eine beispielhafte Speichereinheit sowie
- FIG 5: eine mögliche Schaltanordnung.

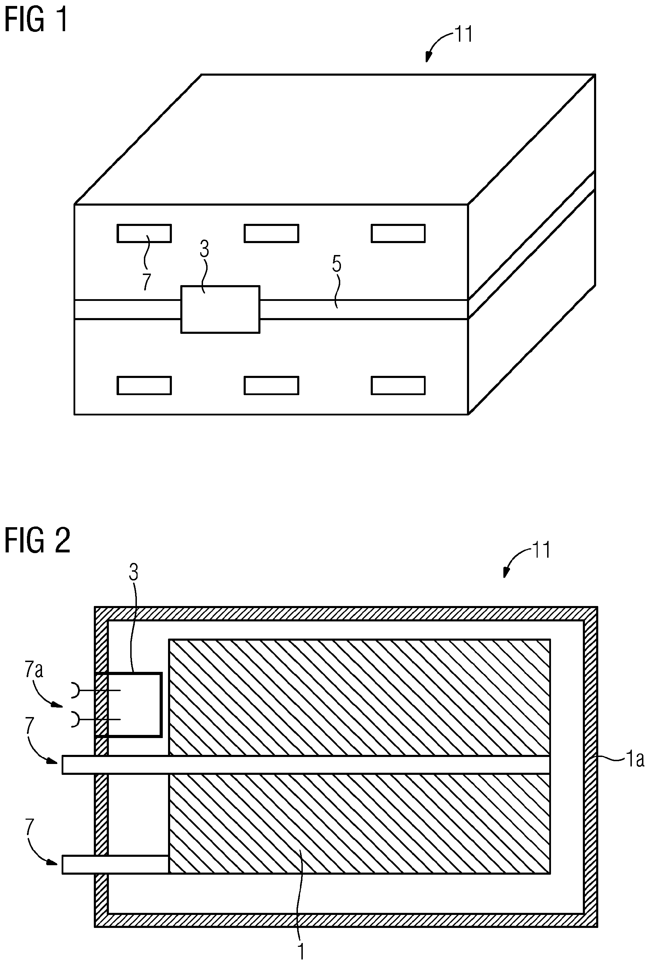

FIG 1 zeigt eine beispielhafte Speichereinheit 11, das als Kondensator oder als Akku (wiederaufladbare Batterie) ausgebildet sein kann. Die Speichereinheit 11 umfasst vorzugsweise zumindest ein Speicherelement 1 (nicht gezeigt). Das Speicherelement 1 umfasst eine Mehrzahl von Anschlusselementen 7. Die Anschlusselemente 7 dienen zur Zuführung und zum Abführen elektrischer Energie. Dem Speicherelement 1 ist weiter ein Mittel zur Erfassung einer physikalischen Größe 3 zugeordnet.

Das Mittel 3 zur Erfassung der physikalischen Größe kann als Drucksensor und/oder als Temperatursensor ausgebildet sein. Zur Befestigung des Mittels 3 zur Erfassung der physikalischen Größe dient ein Befestigungsmittel 5. Das Mittel 3 zur Erfassung der physikalischen Größe kann auch in dem Speicherelement 1 integriert sein, wie nachfolgend gezeigt.

FIG 2 zeigt eine beispielhafte Speichereinheit 11 mit einem integrierten Mittel 3 zur Erfassung einer physikalischen Größe 1. Das hier gezeigte Speichereinheit 11 ist weist vorzugsweise einen Kondensator als Speicherelement auf. Die Speichereinheit 11 umfasst Anschlusselemente 7 sowie ein Mittel 3 zur Erfassung einer physikalischen Größe. Das Mittel 3 zur Erfassung der physikalischen Größe ist mit der Speicherelement 1 gemeinsam in einem Gehäuse 1a oder der Hülle der Speichereinheit 11 integriert. Das Mittel zur Erfassung der physikalischen Größe 3 weist überdies eigene Anschlusselemente 7a auf, wobei die Anschlusselemente 7a zur Erfassung der physikalischen Größe sowie zur Stromversorgung des Mittels zur Erfassung der physikalischen Größe dienen können.

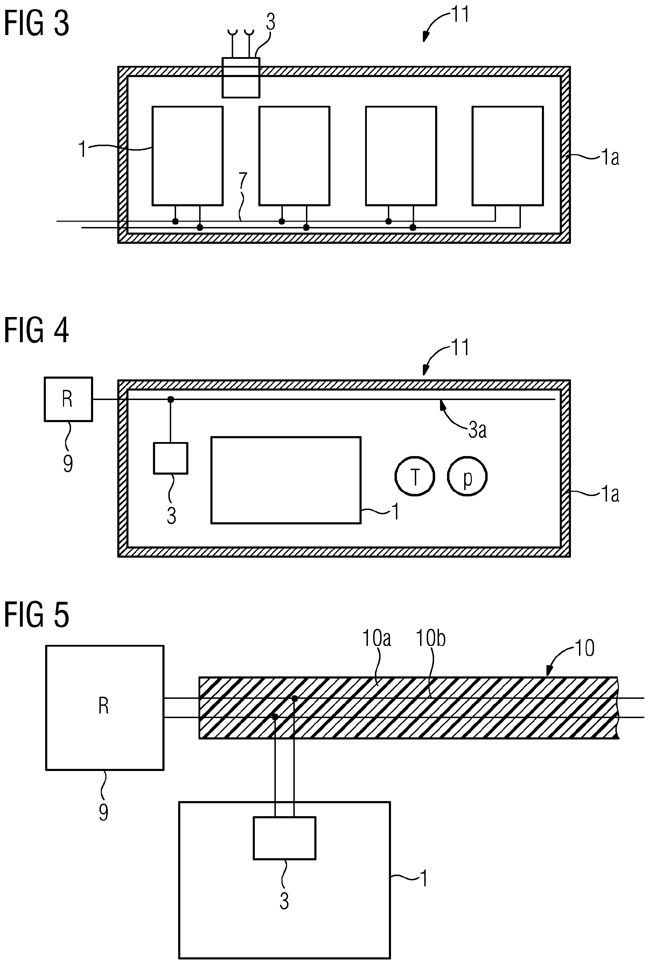

FIG 3 zeigt eine Speichereinheit 11. Die Speichereinheit 11 umfasst vier Speicherelemente 1, die gemeinsam in einem Gehäuse 1a der Speichereinheit 11 integriert sind. Dem Gehäuse 1a ist weiter das Mittel 3 zur Erfassung der physikalischen Größe zugeordnet. Das Mittel 3 zur Erfassung der physikalischen Größe ist hier lediglich im selben Gehäuse 1a wie die Speicherelemente 1 untergebracht. Demnach ist das Mittel 3 zur Erfassung der physikalischen Größe vorzugsweise als Druckmess- oder als Drucksensor ausgebildet. Bei einer Fehlfunktion eines der Speichereinheiten 1 steigt der Druck p innerhalb des Gehäuses 1a an. Dieser zeitliche Anstieg des Drucks p wird mit Hilfe des Mittels 3 zur Erfassung der physikalischen Größe registriert.

FIG 4 zeigt eine beispielhafte Speichereinheit 11. Die Speichereinheit 11 umfasst ein Gehäuse 1a und einen Temperatursensor 3a in Form eines Kabels. Weiter umfasst die gezeigte Speichereinheit 11 ein Mittel zur Erfassung der physikalischen Größe 3. Zur Ermittlung der Temperatur T und/oder einer weiteren physikalischen Größe, beispielhaft dem Druck p dient ein übergeordnetes Sicherheitssystem 9. Das übergeordnete Sicherheitssystem 9 erfasst den elektrischen Widerstand R des Temperatursensors und/oder des Mittels 3 zur Erfassung der physikalischen Größe. Das Mittel 3 zur Erfassung der physikalischen Größe ist in dieser beispielhaften Ausführung insbesondere als Drucksensor ausgebildet. Bei einer Fehlfunktion des Speicherelements 1, beispielhaft einem Kurzschluss in dem Speicherelement 1, erfolgt ein sprunghafter Anstieg des Druckes p in dem Gehäuse 1a. Der Anstieg des Drucks p wird durch das Mittel 3 zur Erfassung der physikalischen Größe registriert. Das Mittel 3 stellt vorzugsweise in einem solchen Fall ein Signal zu dem übergeordneten Sicherheitssystem 9 bereit. Im Falle einer starken Erwärmung des Speicherelements 11 aufgrund der Fehlfunktion wird die Wärmeentwicklung mit Hilfe des Temperatursensors 3a registriert. Das übergeordnete Sicherheitssystem 9 registriert vorteilhaft den Anstieg der Temperatur T und trennt beispielhaft das Speicherelement von der Stromzufuhr. Das übergeordnete Sicherheitssystem stellt gegebenenfalls ein Warnsignal bereit.

FIG 5 zeigt eine mögliche Schaltanordnung. Die Schaltungsanordnung kann einer hier beschriebenen Speichereinheit 11 zugeordnet sein. Gezeigt ist das übergeordnete Sicherheitssystem 9, welches zur Erfassung des elektrischen Widerstandes R eines Brandschutzkabels 10 dient. Das Brandschutzkabel 10 umfasst eine Polymerschicht 10a sowie zwei Leiter 10b des Brandschutzkabels. Das Brandschutzkabel 10 dient als Temperatursensor 3a. Bei einem Temperaturanstieg über eine festgelegte Temperatur schmilzt die Polymerschicht 10a des Brandschutzkabels und die Leiter 10b des Brandschutzkabels können einander berühren. Durch die Berührung der beiden Leiter 10b des Brandschutzkabels 10 sinkt der Widerstand R, welcher mit Hilfe des übergeordneten Sicherheitssystems 9 erfasst wird. Der jeweilige Leiter 10b des Brandschutzkabels 10 ist überdies mit dem Mittel zur Erfassung der physikalischen Größe 3 parallel geschaltet. Das Mittel 3 zur Erfassung der physikalischen Größe ist hier als Drucksensor 3a ausgebildet. Das Mittel 3 zur Erfassung der physikalischen Größe ist hierbei einem Speicherelement 1 zugeordnet. Bei Auftreten einer Fehlfunktion des Speicherelements 1 ändert sich die physikalische Größe, insbesondere der Druck p und/oder die Temperatur T, in dem Speicherelement sowie in der unmittelbaren Umgebung des Speicherelements 1. Eine Änderung der Temperatur T wird durch das Brandschutzkabel 10 registriert. Eine Änderung des Drucks p wird durch das Mittel 3 zur Erfassung der physikalischen Größe registriert. Bei einer Fehlfunktion ändert sich demnach der Widerstand R des Brandschutzkabels oder des Mittels 3 zur Erfassung der physikalischen Größe. Die übergeordnete Steuereinrichtung 9 erfasst die Änderung des elektrischen Widerstandes R und ist in der Lage, ein Signal bereitzustellen. Bei einer Fehlfunktion des Speicherelements 1 wird vorteilhaft die Stromversorgung des Speicherelements unterbrochen.

Die gezeigte Ausführung ist vorzugsweise in einem geschlossenen Gehäuse 11 oder einem wesentlichen geschlossenen Gehäuse 11 angeordnet.

Zusammenfassend betrifft die Erfindung eine Speichereinheit 11 für elektrische Energie sowie ein Verfahren zur Überwachung einer solchen Speichereinheit 11. Die Speichereinheit 11 weist zumindest ein Speicherelement 1 zur kurzzeitigen Speicherung elektrischer Energie, beispielhaft einen Akku oder einen Kondensator, auf. Dem Speicherelement 1 ist ein Mittel 3 zur Erfassung physikalischer Größen, insbesondere eines Druckes p oder einer Temperatur T, im unmittelbaren Umfeld des Speicherelements 1 zugeordnet, wobei das Mittel 3 zur Erfassung der physikalischen Größe insbesondere zur Erfassung einer zeitlichen Änderung der physikalischen Größe ausgebildet ist, wobei das Mittel 3 zur Erfassung der physikalischen Größe bei Überschreiten einer vorgebbaren zeitlichen Änderung der physikalischen Größe zur Bereitstellung eines Signals ausgebildet ist. Ein vorteilhafter Einsatz der Erfindung erfolgt in einem Zwischenkreiskondensator bei einem Schienenfahrzeug.

## Patentansprüche

1. Speichereinheit (11) für elektrische Energie, aufweisend zumindest ein Speicherelement (1) zur Speicherung elektrischer Energie, beispielhaft einen Akku oder einen Kondensator, wobei dem Speicherelement (1) ein Mittel (3) zur Erfassung von physikalischen Größen, insbesondere eines Druckes (p) oder einer Temperatur (T), im unmittelbaren Umfeld des Speicherelements (1) zugeordnet ist, wobei das Mittel (3) zur Erfassung der physikalischen Größe zur Erfassung einer zeitlichen Änderung der physikalischen Größe ausgebildet ist, wobei das Mittel (3) zur Erfassung der physikalischen Größe bei Überschreiten einer vorgebbaren zeitlichen Änderung der physikalischen Größe zur Bereitstellung eines Signals ausgebildet ist.

2. Speichereinheit (11) nach Anspruch 1, wobei das Mittel (3) zur Erfassung der physikalischen Größe und das Speicherelement in einem geschlossenen oder im Wesentlichen geschlossenen Gehäuse (1a) angeordnet sind.

3. Speichereinheit (11) nach einem der vorangehenden Ansprüche, wobei dem Mittel (3) zur Erfassung der physikalischen Größe eine Auswerteeinrichtung zugeordnet ist, wobei der Auswerteeinrichtung und/oder dem Mittel zur Erfassung der physikalischen Größe eine Energiequelle zugeordnet ist und die Energiequelle zur Versorgung des Mittels zur Erfassung der physikalischen Größe und/oder der Auswerteeinrichtung mit elektrischer Energie vorgesehen ist.

4. Speichereinheit (11) nach einem der vorangehenden Ansprüche, wobei das Mittel (3) zur Erfassung der physikalischen Größe als Druck- und/oder Temperatursensor (3a) ausgebildet ist.

5. Speichereinheit (11) nach einem der vorangehenden Ansprüche, wobei das Signal entsprechend einem elektrischen Widerstand (R) des Mittels (3) zur Erfassung der physikalischen Größe ausgebildet ist.

6. Speichereinheit (11) nach einem der vorangehenden Ansprüche, wobei das Mittel (3) zur Erfassung einer physikalischen Größe in dem Speicherelement (1) integriert ist.

7. Speichereinheit (11) nach einem der vorangehenden Ansprüche, wobei die Auswerteeinrichtung und/oder das Mittel (3) zur Erfassung einer physikalischen Größe mit einem übergeordneten Sicherheitssystem (9) verbunden sind.

8. Speichereinheit (11) nach einem der vorangehenden Ansprüche, insbesondere nach Anspruch 7, wobei der Speichereinheit (11) ein erstes Mittel zur Erfassung einer physikalischen Größe und ein zweites Mittel zur Erfassung einer physikalischen Größe zugeordnet ist, wobei das erste und das zweite Mittel zur Erfassung der physikalischen Größe mit dem übergeordneten Sicherheitssystem (9) verbunden sind, wobei das erste und das zweite Mittel zur Erfassung der physikalischen Mittel jeweils bei Überschreiten der vorgebbaren zeitlichen Änderung einen festgelegten elektrischen Widerstand (R) aufweisen, wobei der elektrische Widerstand (R) von dem übergeordneten Sicherheitssystem (9) erfasst wird, wobei das erste und das zweite Mittel zur Erfassung der physikalischen Größe elektrisch parallel geschaltet sind.

9. Speichereinheit (11) nach einem der vorangehenden Ansprüche, insbesondere nach Anspruch 7, wobei das übergeordnete Sicherheitssystem (9) bei Überschreiten der vorgebbaren zeitlichen Änderung der physikalischen Größe zur Entkoppelung und/oder zur Ableitung der elektrischen Energie aus dem jeweiligen Speicherelement (1) ausgebildet ist.

10. Verfahren zur Überwachung einer Speichereinheit (11) für elektrische Energie auf eine Fehlfunktion, insbesondere einen Kurzschluss, wobei die Speichereinheit (11) ein oder mehrere Speicherelemente (1) umfasst, wobei dem jeweiligen Speicherelement (1) ein Mittel (3) zur Erfassung einer physikalischen Größe zugeordnet ist, wobei das Mittel (3) zur Erfassung der physikalischen Größe eine zeitliche Änderung der physikalischen Größe oder die physikalische Größe detektiert, wobei das Mittel (3) zur Erfassung der physikalischen Größe bei Überschreiten einer vorgebbaren zeitlichen Änderung der physikalischen Größe ein Signal bereitstellt oder einen elektrischen Widerstand (R) aufweist.

11. Verfahren nach Anspruch 10, wobei das Signal einem übergeordneten Sicherheitssystem (9) bereitgestellt wird, wobei das übergeordnete Sicherheitssystem (9) bei Erhalt des Signals die Zufuhr von elektrischer Energie in das jeweilige Speicherelement (1) unterbindet und/oder die elektrische Energie aus dem jeweiligen Speicherelement (1) entfernt.

12. Verfahren nach einem der Ansprüche 10 oder 11, wobei mit Hilfe des Mittels (3) zur Erfassung der physikalischen Größe ein Druck- und/oder Temperaturanstieg im unmittelbaren Umfeld des jeweiligen Speicherelements (1) erfasst wird.

13. Verfahren nach einem der Ansprüche 10 bis 12, wobei das Mittel (3) zur Erfassung der physikalischen Größe je nach Änderung der physikalischen Größe einen bekannten elektrischen Widerstand (R) aufweist, und der Widerstand (R) von dem übergeordneten Sicherheitssystem (9) erfasst wird.

14. Fahrzeug, insbesondere Schienenfahrzeug, aufweisend eine Speichereinheit (11) nach einem der Ansprüche 1 bis 9.

15. Frequenzumrichter, aufweisend eine Speichereinheit (11) nach einem der Ansprüche 1 bis 9.
